# NEUE EUROPÄISCHE PATENTSCHRIFT

(11) **EP 0 582 820 B2**
(45) Veröffentlichungstag und Bekanntmachung des Hinweises auf die Entscheidung über den Einspruch: **12.01.2000**
(45) Hinweis auf die Patenterteilung: 16.08.1995
(21) Anmeldenummer: 93110243.8
(22) Anmeldetag: 26.06.1993
(51) Int. Cl.: B60R 25/02

(54) **Lenkschloss für ein Kraftfahrzeug**
Steering lock for an automobile
Serrure de blocage de direction pour un véhicule automobile

(30) Priorität: 11.08.1992 DE 4226482
(43) Veröffentlichungstag der Anmeldung: 16.02.1994
(73) Patentinhaber: Valeo Deutschland GmbH & Co. Sicherheitssysteme, 85253 Erdweg (DE)
(72) Erfinder: Lehmeier, Norbert, D-8070 Ingolstadt (DE)
(74) Vertreter: COHAUSZ HANNIG DAWIDOWICZ & PARTNER

(56) Entgegenhaltungen:
- DE-A- 2 126 574
- DE-B- 1 269 516
- DE-B- 1 287 462
- FR-A- 2 264 692
- US-A- 3 442 102
- US-A- 3 566 632

## Beschreibung

Die Erfindung betrifft ein Lenkschloß mit einem Schließzylinder, dessen Zylinderkern mit dem inneren Ende einen Steuernocken verdreht, der einen den Sperriegel bewegenden Steuerschieber quer zur Schloßachse verschiebt, wobei der Steuernocken mit seinem inneren Ende mit einem Drehschalter verbunden ist.

Bei einigen solcher Schlösser liegen Schließzylinder, Steuernocken, Steuerschieber und elektrischer Drehschalter axial hintereinander, wobei zwischen dem Steuerschieber und dem Drehschalter ein verhältnismäßig großer Abstand sein muß, da in diesem Zwischenraum der Sperriegel gelagert ist, der mit seinem äußeren Ende die Lenkung blockiert.

Um die Baulänge des Lenkschlosses zu verkürzen und so für den Fahrer oder andere Bauteile Platz zu schaffen, wird wie in DE-B-1269516 oder in DE-B-1287462 beschrieben, der Sperriegel in größerem Abstand seitlich versetzt zur Schloßachse angeordnet. Somit ist das dem Schließzylinder zugewandte Ende des Drehschalters nahe benachbart dem Steuerschieber angeordnet und die Baulänge verkürzt.

Der in diesen Druckschriften dokumentierte Stand der Technik bedient sich jedoch eines komplizierten und anfälligen, mittels einer zusätzlichen Kerbe am Schlüssel betätigbaren Mechanismus, um den Sperriegel bei Abzug des Schlüssels in die Lenksäule rasten zu lassen, bzw um den Sperriegel in der "Sperrbereitschaftsstellung" zu arretieren. Ein Lenkschloß der im Oberbegriffs des Anspruchs 1 genannten Art ist aus der US-A-3 566 632 bekannt.

Aufgabe der Erfindung ist es, ein Lenkschloß der genannten Art so zu verbessern, daß es in Richtung der Schloßachse eine noch geringere Länge aufweist.

Diese Aufgabe wird erfindungsgemäß durch ein Lenkschloß für ein Kraftfahrzeug mit den Merkmalen des Anspruchs 1 gelöst.

Der elektrische Drehschalter rückt durch diese Anordnung des Sperriegels noch näher an den Schließzylinder ran. Der Mechanismus mit dem der Sperriegel in der Sperrbereitschaftsstellung arretiert wird ist weniger aufwendig und daher weniger störanfällig.

Die genannte Anordnung des Sperriegels wird bei einer bevorzugten Version des Lenkschlosses erreicht, wenn die Sperrbereitschaftstellung nach Verdrehen des Steuernockens erreicht wird, indem ein im Steuerschieber gelagerter Stift hinter dem Steuernocken einrastet.

Optimale Kräfteverhältnisse bei der Sperrung der Lenkung durch den Sperriegel werden geschaffen, wenn die Achse des Sperriegels die Achse der Lenksäule schneidet.

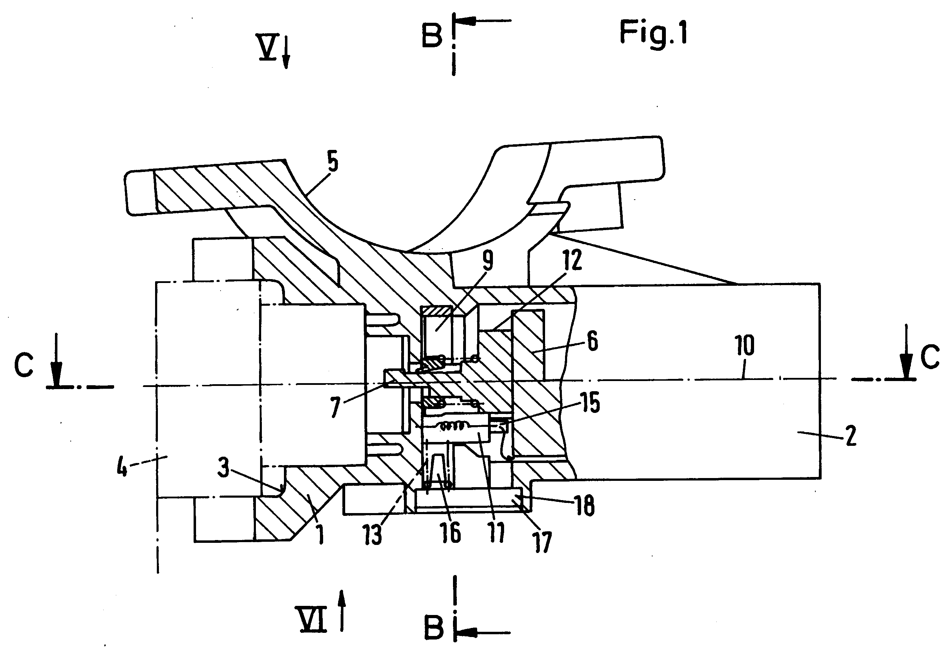

Ein Ausführungsbeispiel der Erfindung ist in der Zeichnung dargestellt und wird im folgenden näher beschrieben. Es zeigen
- Figur 1: einen ersten axialen Schnitt durch das Lenkschloß nach A-A in Figur 2,
- Figur 2: eine zweiten axialen Schnitt durch das Lenkschloß nach C-C in Figur 1,
- Figur 3: einen Querschnitt nach B-B in Figur 1,

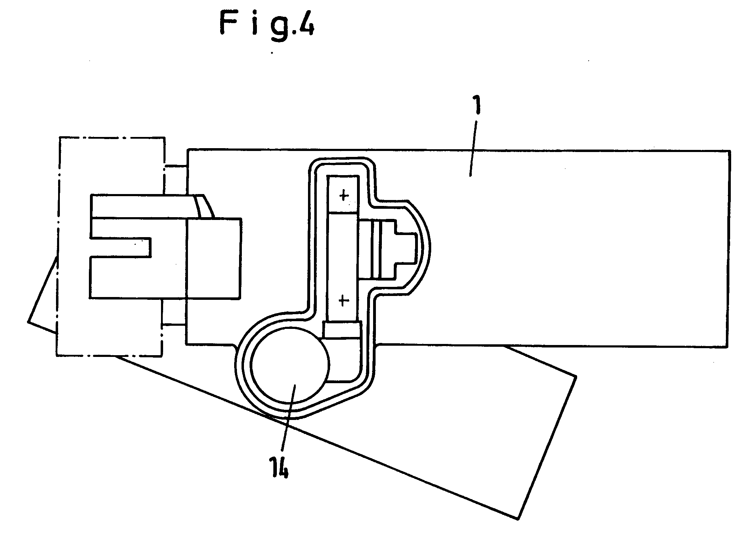

- Figur 4: eine Ansicht in Richtung des Pfeiles VI in Figur 1,

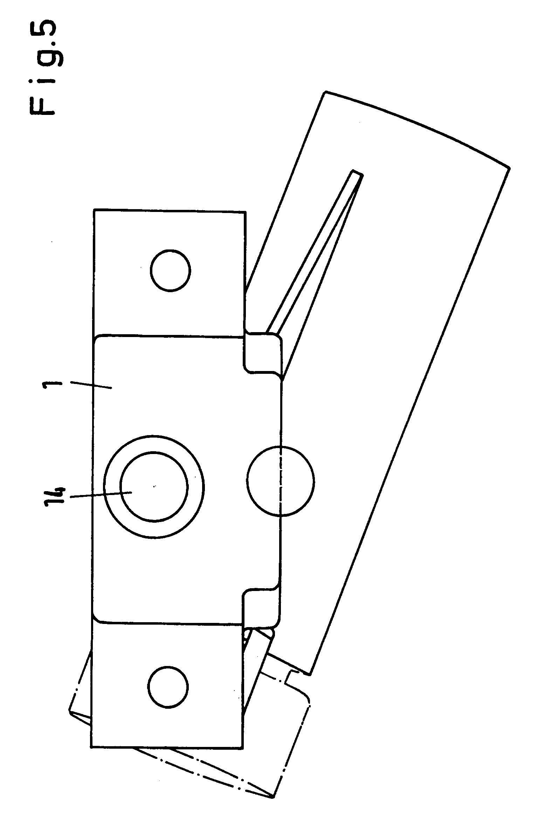

- Figur 5: eine Ansicht in Richtung des Pfeiles V in Figur 1.

Das Lenkschloß besitzt ein Gehäuse 1, das auch das Gehäuse 2 für den Schließzylinder bildet und eine Ausnehmung 3 für einen Drehschalter 4 und eine zweite Ausnehmung 5 zur Befestigung an der Lenksäule besitzt. Schließzylinder und Drehschalter sind koaxial zueinander angeordnet.

Der im Schloßgehäuse 2 koaxial einliegende nicht dargestellte Schließzylinder besitzt einen Zylinderkern, in dessen Schlüsselkanal der Schlüssel einsteckbar ist und der durch den Schlüssel in einem Zylindergehäuse drehbar gelagert ist. Am inneren Ende des Zylinderkerns ist ein Steuernocken 6 koaxial befestigt, dessen inneres Ende eine Welle 7 bildet, die in den Drehschalter 4 hineinreicht, um diesen zu betätigen.

Der Steuernocken 6 ragt mit seiner Welle 7 durch eine Öffnung 8 eines Steuerschiebers 9 hindurch, der quer zur Achse 10 des Schließzylinders verschieblich ist. Der Steuerschieber 9 weist einen seitlichen, zum Steuernocken 6 hin gerichteten Vorsprung 11 auf, der auf einer Steuerkurve 12 am Umfang des Steuernockens anliegt, so daß bei Drehen des Steuernockens 6 durch den Zylinderkern der Vorsprung 11 und damit der Steuerschieber 9 gegen den Druck einer Feder 13 von der Lenksäule weg bewegbar ist. Hierbei nimmt der Steuerschieber 9 den Sperriegel 14 mit.

Im Vorsprung 11 ist ein achsparalleler Stift 15 in der Längsrichtung gelagert, der durch eine im Vorsprung 11 einliegende Feder nach außen gedrückt wird. Die Steuerkurve 12 des Steuernockens 6 nimmt somit den Steuerschieber 9 beim Verdrehen mit, bis der Stift 15 des Steuerschiebers 9 hinter den Steuernocken 6 einrastet. Dort bleibt der Stift 15 auch dann, wenn der Schlüssel und der Zylinderkern auf die Nullstellung zurückgedreht wird (Sperrbereitschaftsstellung). Erst wenn durch Herausziehen des Schlüssels der Zylinderkern axial nach außen sich bewegt, wird der Stift vom Steuernocken freigegeben, so daß der Steuerschieber 9 sich zurückbewegen und der Sperriegel in eine Ausnehmung der Lenkspindel einrasten kann.

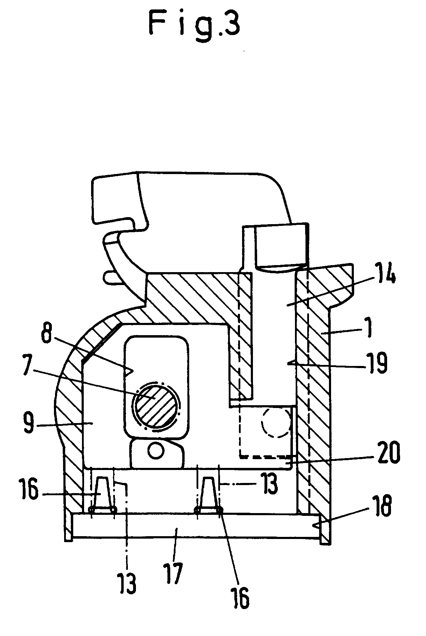

Die den Steuerschieber 9 belastende Feder 13 ist auf einem Zapfen 16 gelagert, der an einem Deckel 17 angeformt ist, der eine seitliche Öffnung 18 verschließt, durch die der Steuerschieber 9 erreichbar ist. Wie in Figur 3 dargestellt, weist der Deckel 17 mindestens zwei Zapfen 16, die jeweils eine Feder 13 lagern, so daß der Steuerschieber 9 durch zwei Schraubendruckfedern 13 in Richtung der Lenksäule belastet ist.

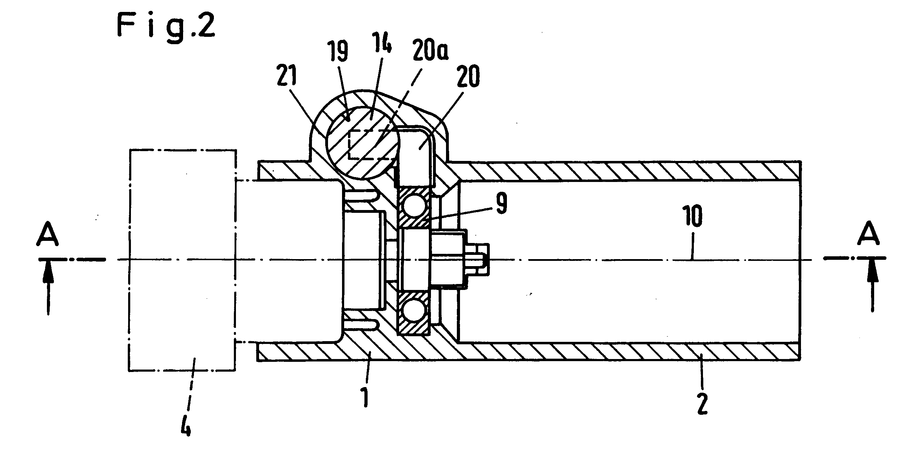

Der Sperriegel 14 befindet sich nicht in dem Raum bzw. Zwischenbereich zwischen dem Steuerschieber und dem Drehschalter 4. Vielmehr ist der Drehschalter 4 sehr nahe an den Steuerschieber 9 herangerückt, so daß das innere Ende des Drehschalters 4 nur 2mm vom Steuerschieber 9 entfernt angeordnet ist. Der Sperriegel 14 befindet sich damit außerhalb dieses Bereichs und ist seitlich versetzt neben dem Steuerschieber 9 und/oder neben dem inneren Ende des Drehschalters 4 angeordnet, siehe Figur 2 und 3. Hierbei ist der Sperriegel 14 in einer Bohrung 19 derart angeordnet, daß seine Achse die Achse der Lenkspindel schneidet.

Der Steuerschieber 9 weist einen seitlichen Vorsprung 20 auf, der an dem inneren Ende des Sperriegels 14 liegt, wobei der Sperriegel 14 etwa zur Hälfte seiner Länge parallel neben den Steuerschieber 9 in Bewegungsrichtung des Steuerschiebers liegt. Der Vorsprung 20 des Steuerschiebers 9 liegt zu einem Teil in der Ebene des plattenförmigen Steuerschiebers, wobei der äußere Bereich des Vorsprungs 20 rechtwinklig zu einem Vorsprungende 20a abgebogen ist, um am inneren Ende des Sperriegels 14 mit diesem Ende 20a anzuliegen. Durch diese Konstruktion liegt der Sperriegel 14 direkt seitlich neben dem Vorsprung 20 und neben dem inneren Ende des Drehschalters 4, wobei die Bohrung 19 von einer Auswölbung 21 des Gehäuses 1 seitlich des Drehschalters 4 gebildet ist.

## Patentansprüche

1. Lenkschloß für ein Kraftfahrzeug mit einem Schließzylinder, dessen Zylinderkern mit dem inneren Ende einen Steuernocken (6) verdreht, der einen den Sperriegel (14) bewegenden Steuerschieber (9) quer zur Schloßachse (10) verschiebt, wobei der Steuernocken (6) mit seinem inneren Ende mit einem Drehschalter (4) verbunden ist und wobei der Sperriegel (14) mit seiner Achse zur Schloßachse (10) seitlich versetzt neben dem Steuerschieber (9) und in bezug auf den Schließzylinder hinter dem Steuerschieber (9), angeordnet ist dadurch gekennzeichnet, daß der Sperriegel (14) neben dem inneren Ende des Drehschalters (4) angeordnet ist, wobei das innere Ende des Drehschalters (4) nur 2 Millimeter vom Steuerschieber (9) entfernt angeordnet ist und der Steuerschieber (9) durch mindestens zwei Federn (13) in Richtung der Lenksäule belastet ist, wobei der Steuerschieber (9) einen seitlichen Vorsprung (20, 20a) bildet, der am inneren Ende des Sperriegels (14) anliegt.

2. Lenkschloß Anspruch 1,
**dadurch gekennzeichnet,** daß nach Verdrehen des Steuernockens (6) ein im Steuerschieber (9) gelagerter Stift (15) hinter dem Steuernocken (6) einrastet.

3. Lenkschloß nach einem der vorherigen Ansprüche,
**dadurch gekennzeichnet,** daß die Achse des Sperriegels (14) die Achse der Lenksäule schneidet.

## Claims

1. A steering lock for a motor vehicle having a locking cylinder, in which the cylinder core with the inner end twists a peripheral cam (6), which displaces a slide member (9) moving the safety bolt (14) transversally to the look axis (10), with the peripheral cam (6) being connected with its inner end to a rotary switch (4) and with the safety bolt (14) being disposed next to the slide member (9) with its axis laterally offset in relation to the look axis (10) and in relation to the closing cylinder and wherein the safety bolt (14) is disposed behind the slide member (9) characterised in that the safety bolt (14)is next to the inner end of the rotary switch (4), the inner end of the rotary switch (4) is only two millimetres apart from the slide member and wherein the slide member (9) has been loaded by at least two springs (13) in direction to the steering column wherein the slide member (9) forms a lateral projection (20, 20a), which abuts the inner end of the safety look (14).

2. A steering look according to claim 1, characterised in that after the peripheral can (6) has been twisted a pin (15) mounted in the slide member (9) engages behind the peripheral can (6).

3. A steering lock according to one of the preceding claims, characterised in that the axis of the safety bolt (14) intersects the axis of the steering column.

## Revendications

1. Serrure de blocage de la direction pour un véhicule automobile, comportant un cylindre de fermeture, dont le noyau du cylindre fait tourner, avec son extrémité intérieure, un ergot de commande (6) qui déplace, transversalement par rapport à l'axe de la serrure (10), une barre de commande (9) entraînant le verrou de blocage, dans laquelle l'ergot de commande (6) est relié par son extrémité intérieure à un commutateur rotatif (4) et dans laquelle le verrou de blocage (14) est disposé, avec son axe, sur le côté de manière décalée par rapport à l'axe de la serrure (10) au voisinage de la barre de commande (9), caractérisé en ce que le verrou de blocage (14) est disposé, par rapport au cylindre de fermeture, derrière la barre de commande (9) et/ou à coté de l'extrémité intérieure du commutateur rotatif (4) dans laquelle la partie intérieure de commutateur rotatif (4) est séparé seulement deux millimètres de la barre de commande (9) et la barre de commande (9) est chargé au moins par deux ressort en direction de l'arbre de direction en ce que la barre de commande (9) forme une partie en saillie (20, 20a) qui repose a l'extrémité intérieure du verrou de blocage (14).

2. Serrure de blocage de la direction selon la revendication 1, caractérise en ce que après une rotation de l'ergot de commande (6), une tige (15) logée dans la barre de commande (9) s'encliquette derrière l'ergot de commande (6).

3. Serrure de blocage de la direction selon l'une quelconque des revendications précédentes, caractérise en ce que l'axe du verrou de blocage (14) coupe l'axe de la colonne de direction.
